# EUROPEAN PATENT SPECIFICATION

(11) **EP 3 632 212 B1**
(45) Date of publication and mention of the grant of the patent: **08.01.2025**
(21) Application number: 17911061.4
(22) Date of filing: 26.05.2017
(51) Int. Cl.: A23F 3/34, A23F 3/06, A23F 3/12

(54) **METHOD FOR PREPARING GREEN TEA FROM YERBA MATE**
VERFAHREN ZUR HERSTELLUNG VON GRÜNEM TEE AUS YERBA-MATE
PROCÉDÉ DE PRÉPARATION DE THÉ VERT À PARTIR DE YERBA MATE

(30) Priority: 24.05.2017 BR 102017010847
(43) Date of publication of application: 08.04.2020
(73) Proprietor: Montagner, Juliana - Me, 95990-000 Ilopolis - RS (BR)
(72) Inventor: Montagner, Juliana - Me, 95990-000 Ilopolis - RS (BR)
(74) Representative: Pereira Garcia, João Luís
(86) International application number: PCT/BR2017/000054
(87) International publication number: WO 2018/213900

(56) References cited:
- CN-A- 103 976 046
- CN-A- 104 430 988
- JP-A- S58 121 753
- KR-A- 20090 109 679
- KR-A- 20100 049 323
- US-A- 2 115 411
- US-A- 2 115 411
- US-A1- 2013 280 389
- US-A1- 2013 280 389
- C.I. HECK ET AL: "Yerba Mate Tea (Ilex paraguariensis): A Comprehensive Review on Chemistry, Health Implications, and Technological Considerations", JOURNAL OF FOOD SCIENCE, vol. 72, no. 9, 1 November 2007 (2007-11-01), pages R138 - R151, XP055085583, ISSN: 0022-1147, DOI: 10.1111/j.1750-3841.2007.00535.x
- MATSUMOTO, R. L. T.: "Atividade antioxidante do chá mate (Ilex paraguariensis)", 2008, São Paulo, pages 1 - 103, XP055613156, Retrieved from the Internet <URL:https://www.teses.usp.br/teses/disponiveis/6/6133/tde-21072008-150005/publico/RUTH_Tese_PDF.pdf REM - Uploaded on 15-Aug-2019 through CiteNPL>
- ESMELINDRO, M. C. ET AL.: "Caracterização fisico-química da erva-mate: influência das etapas do processamento industrial", CIÊNCIA E TECNOLOGIA DE ALIMENTOS, vol. 22, no. 2, 2002, Campinas, pages 193 - 204, XP055612948
- NISHIYAMA, M. F. ET AL.: "Chá verde brasileiro (Camellia sinensis var assamica): efeitos do tempo de infusão, acondicionamento da erva e forma de preparo sobre a eficiência de extração dos bioativos e sobre a estabilidade da bebida", CIÊNCIA E TECNOLOGIA DE ALIMENTOS, vol. 30, no. 1, 2010, Campinas, pages 191 - 196, XP055612953

## Description

### Technical Field

The following descriptive report for the invention relates to the preparation process of green tea made from yerba mate (*Ilex* paraguariensis).

### Prior Art

It is known that the food use of yerba mate is restricted to some regions of South America, where its largest consumption occurs in the form of mate, cultural habit. The present product has the potential to compete with consumers worldwide, as does *Camellia sinensis* green tea and black tea, and reach consumers that the mate would be unable to reach.

In order to use the yerba mate, various drying processes are known, for example, those described in PI 9504075-7 comprising a construction having a heat draft system through modular upper outlets with a butterfly valve on each chimney. Inside the oven, two belts are moved in series, in the opposite direction, one upper and one lower, and the belts are unloaded by means of load-shifters, consisting of a shaft with blades, rotating in the same direction as the belts. A deflector plate directs the yerba mate from the upper belt to the bottom one and to a discharge mouth steering the yerba mate from the lower belt to the output conveyor belt. The furnaces conduct the heat generated to the furnace by ducts that branch into two branches, where a distributor receives the yerba mate from a ribbon.

MU 7703102-4 describes an equipment for the processing of yerba mate in an industrial manner wherein it is powered by a vertical duct, feeds a sloping horizontal rail for the action of two rows of "S" cam pestles on the alternating rollers, and motor-drive sequentials to grind and create the gum on the yerba mate, such equipment may be made up of a single row of pestles, which in turn use wooden or steel sliding sleepers as a guide, so the pestles have free action to reach the bottom of the lower rail provided at their end a carrier thread that will take the yerba mate already in final form to usual bagging carriers.

PI 1002236-8 describes a fractionation and sapping process for yerba mate with hot water steam for eliminating toxicity. In short, it consists of passing the herb leaves through a controlled and previously calculated temperature water steam bath, for the purpose of leaf preparation, for human consumption. The process is initiated by primary equipment with saturated steam injection, from an aquatubular boiler, interconnected to the secondary equipment that receives, through the injectors, the injection of reheated steam with preset pressure and temperature.

An equipment for sapping and drying of yerba mate leaves through hot water steam is described in MU 9001057-4, the purpose of which is to eliminate contamination of the yerba mate by PAHS (aromatic polycyclic hydrocarbons) from the sapping and drying process of the yerba mate leaves, the equipment is composed by a primary processing module with herb feed inlet and a secondary processing module, with injecting nozzles distributed six on each side amounting twelve in total, from the aquatubular boiler by saturated steam pipe and reheated steam pipe interconnected to the secondary nozzles, distributed two on each side and one on the top.

Heck et al. J. Food Science (2007), Vol. 72 (9), pp. R138-R151 is a scientific review on the production of yerba mate and provides a comparison to tea processing.

US2115411 describes a process to produce yerba mate products, such as tea, wherein the leaves and twigs are soaked in an alkaline solution.

US201328039 describes a method to produce green tea with the steps of steaming, drying rolling and roasting.

### Discussion

To expand a consumption form of yerba mate means introducing into the people diet the antioxidants presented in such species, which are superior to *Camellia sinensis.*

From what is known from the prior art, direct contact of yerba mate leaves with gases generated in the furnace during the sapping step can produce contamination of the raw material by aromatic polycyclic hydrocarbons. These have high carcinogenic potential, which may remain in the final product intended for the consumer. It is also a problem, the absence of washing of leaves at the beginning of processing. Herb material may be contaminated by environmental pollutants, microorganisms and small invertebrates.

In the initial step of proposed process, young leaves (buds) of yerba mate are undergone to steam between 09 and 100º for a certain time. Thus, the invention has the object to solve the abovementioned problems by modifying the processing form by which the leaves are undergone. After they pass through steam (steaming), the leaves are cooled (cooling), rolled (1^{st} rolling), first drying (1^{st} drying), second rolling (2^{nd} rolling), second drying (2^{nd} drying) and separation (segregation).

### Description

The embodiment of the invention proposed in this report is achieved by describing the different steps required for carrying out the present ordinary application, such that it can be fully reproduced by appropriate technique, allowing full characterization of the claimed process function.

Based on the different described steps that express the best way or preferential way to carry out the process now devised, is based on the descriptive part of the report clarifying aspects that may have been understood, in order to clearly determine the protection claimed.

These operations may vary, provided that they do not depart from the claimed subject matter.

In this case, the products can be generated by different operations.

In the developed preparation process, the young leaves of yerba mate should go through the following steps:
- Steaming the young leaves (buds) of yerba mate at 90 to 100 °C for three to five minutes (steaming);
- afterwards, it is required to remove water in excess that is contained in the leaves, due to the steam bath. It can be done by hand by rolling the leaves in a cloth and due to the twist of the cloth the green juice is extracted, or by industrial means by pressing the leaves until the green juice is removed. After this step of removing the green juice coming from the steaming, the leaves are rolled for the first time for 20 minutes (first rolling). The essential thing at this step is to roll the leaves, and the mentioned method can be cited or changed;
- Immediately after this step, the leaves are spread on a flat surface for cooling, aided by continuous cold air from a fan/cooler (cooling). The essential thing at this step is to cool the leaves, and the mentioned method can be cited or changed;

The next step is the first drying, or semi-drying, in which the leaves will dehydrate at 100 °C for 20 minutes (drying). The essential thing at this step is to dry the leaves, and the mentioned method can be cited or changed;
The leaves are then driven to roll a second time for 10 to 15 minutes until proper shape/twist (second rolling) is attained. The essential thing at this step is to roll the leaves, and the mentioned method can be cited or changed;
Following the leaves complete the drying process, for 22 to 24 minutes at 110 to 115 °C temperature. The essential thing in this step is to dry the leaves, and the mentioned method can be cited or changed, and;
The last step is segregation/sorting (segregation), where after drying the larger/whole leaf, broken leaf and particulate leaf must be separated.

## Claims

1. A preparation process of green tea from yerba mate comprising the following steps:
- steaming the young leaves (buds) of yerba mate at 90 to 100 °C for three to five minutes,
- removal of moisture from the leaves resulting from the previous step,
- afterwards, the leaves must be rolled for the first time for 20 minutes,
- immediately after this step, the leaves are spread on a flat surface for cooling aided by the continuous cold air of a fan/cooler,
- the next step is the first drying or semi-drying in which the leaves will dehydrate at 100 °C for 20 minutes,
- the leaves are then driven to roll a second time for 10 to 15 minutes until proper shape/twist is attained,
- the leaves then complete the drying process for 22 to 24 minutes at 110 to 115° C temperature, and
- the last step is segregation/sorting, where after drying the larger/whole leaf, broken leaf and particulate leaf should be separated.

## Patentansprüche

1. Ein Verfahren zur Herstellung von grünem Tee aus Yerba Mate, umfassend die folgenden Schritte:
- Dämpfen der jungen Blätter (Knospen) des Yerba Mate bei 90 bis 100 °C für drei bis fünf Minuten,
- Entfernung der im vorhergehenden Schritt entstandenen Feuchtigkeit aus den Blättern,
- danach müssen die Blätter zum ersten Mal 20 Minuten lang gerollt werden,
- unmittelbar nach diesem Schritt werden die Blätter auf einer flachen Oberfläche ausgebreitet, um sie mit Hilfe der kontinuierlichen Kaltluft eines Ventilators/Kühlers abzukühlen,
- der nächste Schritt ist die erste Trocknung oder Halbtrocknung, bei der die Blätter 20 Minuten lang bei 100°C dehydriert werden,
- die Blätter werden dann ein zweites Mal 10 bis 15 Minuten lang gerollt, bis die richtige Form/Drehung erreicht ist,
- die Blätter werden dann 22 bis 24 Minuten lang bei einer Temperatur von 110 bis 115° C komplett getrocknet, und
- der letzte Schritt ist die Trennung/Sortierung, bei der nach dem Trocknen die größeren/ganzen Blätter, gebrochenen Blätter und Blattpartikel getrennt werden.

## Revendications

1. Un procédé de préparation de thé vert à partir de yerba mate comprenant les étapes suivantes :
- la vaporisation des feuilles jeunes (bourgeons) de yerba mate à 90-100°C pendant trois à cinq minutes,
- l'élimination de l'humidité des feuilles résultant de l'étape précédente,
- ensuite, les feuilles doivent être roulées pour la première fois pendant 20 minutes,
- immédiatement après cette étape, les feuilles sont disposées sur une surface plane pour le refroidissement à l'aide de l'air froid en continu d'un ventilateur/refroidisseur,
- l'étape suivante est le premier séchage ou semi-séchage, où les feuilles sont déshydratées à 100°C pendant 20 minutes ;
- ensuite, les feuilles sont roulées une deuxième fois pendant 10 à 15 minutes, jusqu'à atteindre la forme/torsion adéquates,
- les feuilles complètent alors le processus de séchage pendant 22 à 24 minutes à une température de 110-115°C, et
- la dernière étape est la séparation / tri, qui consiste à séparer, après le séchage, les feuilles plus grandes / entières, les feuilles brisées et les feuilles broyées.
